# EUROPEAN PATENT APPLICATION

(11) **EP 1 586 524 A2**
(43) Date of publication of application: **19.10.2005**
(21) Application number: 05102778.7
(22) Date of filing: 08.04.2005
(51) Int. Cl.: B65H 49/28

(54) **Cable unroller**

(30) Priority: 09.04.2004 IT TV20040037; 02.09.2004 IT TV20040100
(71) Applicant: Z.M. di Zamuner Michele, 31032 Casale sul Sile, Treviso (IT)
(72) Inventor: ZAMUNER, Michele, 31030, Casier (Treviso) (IT)
(74) Representative: Agostini, Agostino

(57) **Abstract**

Described is an unreeling apparatus (10) for unwinding cable from a coil, comprising a resting base (24); a support (40) for the coil to be unwound, rotatably coupled to said base so as to be free to rotate relative to said base about a vertical axis; and one or more members (50, 51) provided on said support (40) to engage said coil at the centre thereof.

## Description

The present invention refers to a cable unroller for unwinding cable, such as for instance electric cable, from a coil or reel.

Usually, a cable, such as an electric, metal, plastic or similar cable, is wound on reels or in hanks of quite considerable size and weight, and then sold to the end users. When using a cable that is wound on reels, it must be first unwound from the reel and, for this operation to be carried out, owing to the size of the weight of such reels, use is therefore made of a proper mechanical tool that is generally termed "coil unroller" or "unreeler" " in the art.

Existing unreeling equipment available on the market generally requires that the reel to be unwound be placed upon appropriate trestles in order to have it properly lifted so that - once it is so suspended - it is able to rotate with its axis parallel to the floor in view of unreeling the cable. The use of unreeling equipment of this kind has however a number of drawbacks, i.e.:
- the unreeler is bulky, heavy and, therefore, scarcely transportable for it to be conveniently used in a building yard or the like;
- the operation needed to lift the reel and place it on trestles requires that it be carried out by two or three persons - in which case it can be dangerous- or through the use of mechanical lifting equipment.

As far as cables wound into hanks are concerned, they are currently unwound manually, without using any more or less appropriate tools or aids. Apart from this being rather awkward and tiring as an operation to carry out, cables tend in this case to quite often get twisted, especially if the cables are thin, i.e. have a small cross-section area. In addition, a further drawback found in manually unwinding cables from hanks lies in the fact that the hanks themselves tend to quite easily get tangled , thereby making it necessary for a long and annoying work to be done in view of disentangling and re-arranging them.

It is furthermore to be noticed that no use can in this case be made of traditional unreelers used to unwind reels, since coils do not have a structure allowing them to be unwound on trestles.

It therefore is a major object of the present invention to provide an unreeling apparatus for unwinding cables from coils, which does away with the above-mentioned drawbacks of prior-art solutions.

According to the present invention, this aim is reached in an unreeling apparatus for unwinding cable from a winding, comprising:
- a resting base;
- a support for the winding to be unwound, rotatably coupled to said base so as to be free to rotate relative to said base about a vertical axis;
- one or more members provided on said support to engage said winding at the centre thereof.

Anyway, features and advantages of the present invention shall be more readily understood from the description of a preferred, although not sole embodiment of the invention that is given below by way of example with reference to the accompanying drawings, in which:
- Figure 1 is a perspective view of an unreeling apparatus according to the present invention;
- Figure 2 is a top view of the unreeling apparatus shown in Figure 1;
- Figure 3 is a side view of the unreeling apparatus shown in Figure 1;
- Figure 4 is a vertical cross-sectional view of a rotatably driving mechanism of the unreeling apparatus shown in Figures 1 and 2, as viewed along the plane I-I in Figure 2;
- Figure 5 is a perspective view of a variant in the embodiment of the unreeling apparatus according to the present invention.

In the Figures listed above, an unreeling apparatus according to the present invention for unwinding cables wound in reels is generally indicated at 20 and comprises, as a resting base thereof, a ring 24 and, as a support for the reel of cable to be unwound (not shown), a ring 22. These rings 22, 24 are facing, exposed outwards, in opposite directions, the one ring 22 being actually the top ring and the other one, i.e. the ring 24, the bottom ring.

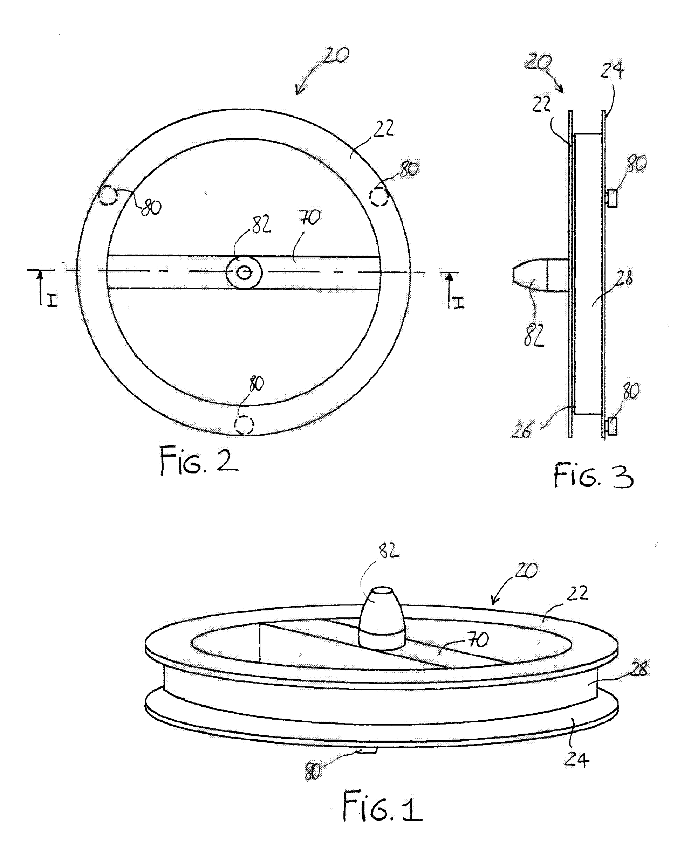

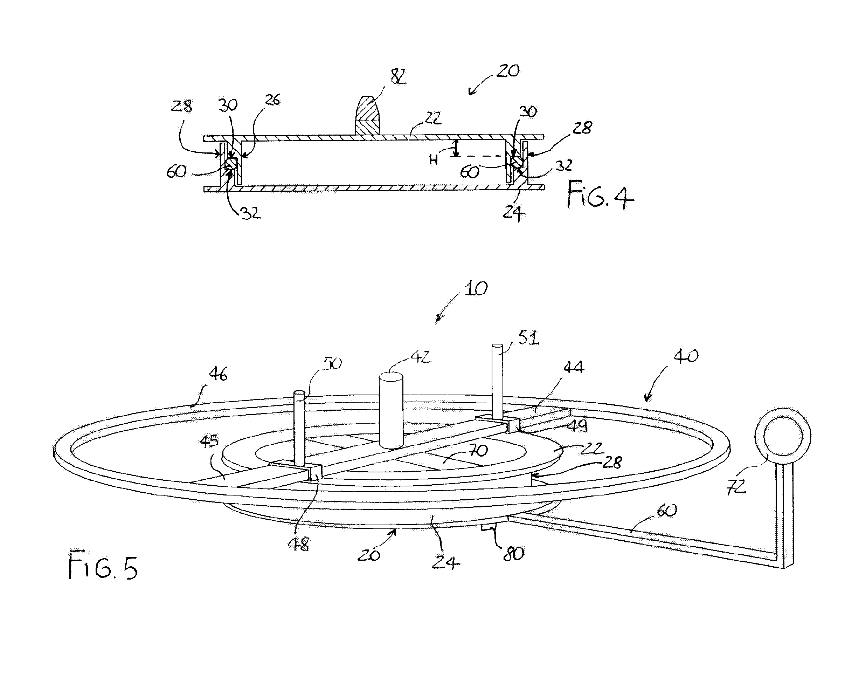

Each one of these rings 22, 24 has a collar portion 26 and 28, respectively, which extends vertically and is perpendicular to the surface thereof. The radiuses of these collar portions 26, 28 are given a slightly different size, so that the same collar portions 26, 28 can be fitted almost completely, i.e. for most of their own height, into each other. As best shown in Figure 4, the collar portions 26, 28 also comprise two step-like configurations 30, 32, respectively, which, with respect to the surface of the rings 22, 24, have a same and equal height H that is sufficient to delimit an annular hollow volume having a substantially square cross-section area, in which balls 60 are tightly (i.e. without any clearance) accommodated. These balls 60, two of which are visible in Figure 4, are arranged in a line along the above-cited annular hollow volume and enable the top ring 22 to rotate with just a minimum of friction about a vertical axis on and relative to the bottom ring 24, thanks to the rolling effect of these balls 60.

The two rings 22, 24 can be prevented from moving away and separating from each other by for instance providing appropriate retaining flanges (not shown). Inside the top ring 22 there is arranged diametrically a bar 70, in the middle of which there is screwed on a stud 82 in the shape of a frustum of a cone.

For a reel to be unwound, all it takes is to have a single person lifting the same reel so as to cause the unreeler 20 to slip under the same reel and have the stud 82 fitted in correspondence to the axial cavity of the reel, where usually passes through the spool thereof. Thus, once the reel is properly positioned thereupon, the stud 82 is capable of securely keeping the same reel on the unreeler 20, as correctly centred thereupon. The present invention, therefore, enables the reel to rotate with a minimum of effort and the cable to be most easily and conveniently unwound. With the unreeler according to the present invention, the reel rotates perpendicularly to the floor and remains in the same position in which it is usually transported and handled, so that it does not require being lifted completely and turned over by 90°.

Another advantage of the present invention lies in the fact that the unreeler itself may be easily adapted to become - as a variant - a most effective and efficient unwinder of cable wound up in hanks, so as this is illustrated in Figure 5, which reference will now be made to, and in which said unwinder is generally indicated at 10.

For this varying embodiment from the previously described unreeler 20 to be obtained, the stud 82 is removed in order to replace it with one or more members adapted to engage the hank in the middle thereof.

The hank unwinder 10 comprises the same mechanism of rotation about a vertical axis as the formerly described unreeler arrangement (i.e., basically a base ring 24 and a hank support top ring 22 rotatably coupled with said base ring 24 so as to be able to freely rotate relative thereto about a vertical axis). This rotation mechanism has already been described in detail hereinbefore, so that it shall not be dealt with any longer (in Figure 5, the same reference numerals are used to indicate same items and details illustrated in the preceding Figures).

Inside the top ring 22 there is even in this case provided diametrically a bar 70, at the middle of which there is secured, by means of a stud 42, a support 40 for the hank of cable to be unwound. Such support 40 comprises two equal radial spokes 44, 45 sustaining a peripheral metal ring 46. Provided slidably on the body portion of said two spokes 44, 45 there are two sleeves 48, 49, which in turn sustain two metal rods 50, 51, respectively, that are arranged perpendicularly to the spokes 44, 45, wherein the spokes 44, 45 are slightly raised from the ring 22 so as to enable said sleeves 48, 49 to slide all along them. Said rods 50, 51 are secured to the respective sliding sleeves 48, 49 by means of a threaded end portion (not shown) thereof, which screws into a corresponding threaded bore (not shown, either) provided in the sleeves 48, 49 themselves. Said threaded end portion is long enough as to be able to pass through the entire thickness of the sleeves 48, 49 and firmly grip against the underlying spokes 44, 45, thereby locking the sleeves 44, 45 and holding them firmly at any desired place along the spokes 44, 45, so as selected in view of the coil to be set thereupon. A rubber ball (not shown) can be placed on the free ends of the rods 50, 51, so as to make them more convenient to screw in and out and/or to prevent accidents and injuries from occurring when striking accidentally thereagainst. The support arrangement 40 can anyway be attached directly on to the top ring 22.

To the bottom ring 24 there may optionally be attached both a L-shaped shank 60, to the free end of which there is attached a ring 72, and antiskid rubber pads 80 (see Figures 1 and 5) located on the bottom, i.e. under the same ring 24.

The way in which this unwinder 10 works is as follows: the hank of cable is placed on the support 40 in a centred position relative thereto (i.e. relative to the stud 42), while keeping at the centre of the hank itself the rods 50, 51 that must be spaced from each other and adjusted along the spokes 44, 45 so as to enable the hank to be placed and arranged correctly (i.e. they must be situated approximately at the extremities of the inside diameter of the hank). Thereupon, the hank lies therefore resting on the support 40 with the cable wound round the rods 50, 51. The task of said rods 50, 51 lies therefore in keeping the wound structure of the hank substantially unaltered, while preventing it from possibly getting tangled, twisted or distorted. In view of enabling the cable to be unwound in a still easier, more convenient manner, the end of the hank may be run through the ring 72, thereby enabling the hank itself to unwind in the same order and progression in which it had been wound; moreover, the cable may be let directly into conduits or similar guides.

A further advantage of the present invention lies in the fact that it works under any working condition and, at the same time, it is lightweight and convenient to transport and move around. In addition, it can be easily disassembled (by unscrewing the stud 42 to separate the support 40 from the ring 22) to more conveniently store it when not in use.

By sizing it appropriately, the unreeler according to the present invention can of course be used to handle reels or hanks of different diameter. In addition, the unreeler according to the present invention enables working time to be cut to a considerable extent, thereby ensuring a greater efficiency at the building yard and, at the same time, reducing accident risks connected with the use of cable unwinding spools.

The invention allows for a number of variations. So, for instance, the number of the spokes 44, 45 may vary, along with the arrangement thereof, depending on the actual needs and application-related requirements. The rods 50, 51 may be replaced by other kinds of spacers, which may for instance be secured to the stud 42. The ring 20 may itself be provided or made in a quite different form, since what really matters here is to just ensure a rotary relative motion about a vertical axis between a support for a winding (which may be a coil or a hank) and a stationary base member resting on the floor (for instance, by using a ball-bearing centre plate). A possible alternative in this connection may be placing a first plate on the floor and welding rotating support rollers thereupon, with the axis of rotation thereof arranged radially relative to the centre of the same plate. A second plate, associated to the first one by means of a rotating pin, is then placed upon the rollers. In this manner, this second plate is able to rotate on the first one owing to the bearing effect provided by the rollers. Rods may be screwed into radial bores provided in the second plate, so as to obtain the same effect as the one ensured by the afore-cited rods 50, 51.

It will in any case be readily appreciated that all these variants fall within the scope of the present invention as defined by the following claims.

## Claims

1. Unreeling apparatus (10; 20) for unwinding cable from a winding, comprising:
- a resting base (24);
- a support (22; 40) for the winding to be unwound, rotatably coupled to said base so as to be free to rotate relative to said base about a vertical axis;
- one or more members (50, 51) provided on said support (24) to engage said winding at the centre thereof.

2. Unreeling apparatus (10; 20) according to claim 1, comprising a plurality of rolling members (60) arranged between said base (24) and said support (22; 40) so as to enable said base and said support to rotate relative to each other under just a minimum of friction.

3. Unreeling apparatus (10) according to claim 1 or 2, wherein said one or more members (50, 51) are spaceable elements capable of being spaced from each other so as to be adapted to the inside diameter of the winding to be unwound.

4. Unreeling apparatus (10) according to claim 3, wherein said mutually spaceable members comprise metal rods (50, 51) arranged perpendicularly to the support (22) and capable of being fastened thereto in a non-permanent manner.

5. Unreeling apparatus (10) according to claim 1, wherein said one or more members (50, 51) comprise a vertical stud (42; 82) firmly joined to said support (40; 22).

6. Unreeling apparatus (20) according to any of the preceding claims 1 to 5, wherein said support (40) comprises spokes (44, 45) adapted to support a metal ring (46).

7. Unreeling apparatus (20) according to claim 6, wherein on said spokes (44, 45) there are slidably provided sleeves (48, 49) that carry said one or more members (50, 51).

8. Unreeling apparatus (20) according to claim 7, wherein said one or more members (50, 51) are connected to said sleeves (48, 49) through a threaded portion thereof screwing into a corresponding threaded bore provided in said sleeves (48, 49), said threaded end portion being long enough as to be able to pass through the entire thickness of the sleeves (48, 49) and firmly grip against the underlying spokes (44, 45).

9. Unreeling apparatus (10; 20) according to any of the preceding claims 1 to 8, wherein said support (22; 40) comprises a ring (22) provided with a first collar portion (26), which extends perpendicularly to the surface of said ring (22), said first collar portion (26) comprising a first step-like configuration (32); and wherein said base (24) comprises a ring (24) provided with a second collar portion (28), which extends perpendicularly to the surface of said ring (24), said second collar portion (28) comprising a second step-like configuration (30); and wherein said first and second collar portions (26, 28) are substantially fitted into each other, the step-like configurations (30, 32) of said collar portions (26, 28) delimiting an annular hollow volume along which there are accommodated a plurality of rolling elements (60).

10. Unreeling apparatus (10) according to any of the preceding claims 3 to 9, wherein a protective rubber ball is attached to the free ends of said rods (50, 51).

11. Unreeling apparatus (10; 20) according to any of the preceding claims, wherein said base is provided with a L-shaped shank (60), to the free end of which there is attached a ring (72), through which the cable may be caused to run during unwinding.

12. Unreeling apparatus (10; 20) according to any of the preceding claims, wherein said base (24) comprises antiskid rubber pads (80).
